# EUROPÄISCHE PATENTSCHRIFT

(11) **EP 0 525 839 B1**
(45) Veröffentlichungstag und Bekanntmachung des Hinweises auf die Patenterteilung: **16.10.1996**
(21) Anmeldenummer: 92201256.2
(22) Anmeldetag: 05.05.1992
(51) Int. Cl.: H01R 35/00, B60R 16/02

(54) **Bauelement zur Übertragung elektrischer Energie**
Component for transmission of electrical energy
Composant pour transmission d'énergie électrique

(30) Priorität: 31.07.1991 DE 4125347
(43) Veröffentlichungstag der Anmeldung: 03.02.1993
(73) Patentinhaber: MST Automotive GmbH Automobil-Sicherheitstechnik, D-63743 Aschaffenburg (DE)
(72) Erfinder: Frisch, Ralph, W-8752 Mömbris (DE)
(74) Vertreter: Fuchs, Luderschmidt & Partner Patentanwälte

(56) Entgegenhaltungen:
- EP-A- 0 195 833
- US-A- 4 917 524
- US-A- 4 919 620

## Beschreibung

Die Erfindung betrifft ein Bauelement zur Übertragung elektrischer Energie von einem festen auf einen drehbaren Anlageteil, vorzugsweise für Lenkanlagen von Kraftfahrzeugen, insbesondere zur Stromzuleitung für den Gasgenerator eines Lenkrads mit integrierter Gassack-Aufprall-Schutzeinrichtung, bestehend aus einem bandförmigen, in mehreren konzentrischen Windungen in einem aus einem gestellfest montierbaren topfförmigen äußeren Bauteil und einem mit seinem hohlzylinderförmigen Kern in der Bodenöffnung des äußeren Bauteils drehbar eingesetzten hutförmigen inneren Bauteil gebildeten Gehäuse aufgewickelten Stromleiter, dessen eines Ende am äußeren und dessen anderes Ende am inneren Bauteil befestigt und mit Kabel- und Steckverbindungen gekoppelt ist, wobei am Außenumfang des einen größeren Durchmesser als der Durchmesser des äußeren Bauteils aufweisenden ganz oder teilweise umlaufenden Flansches des inneren Bauteils eine sich in axiale Richtung erstreckende Lippe angebracht ist und äußerer und innerer Bauteil zu Montagezwecken in Einbaulage arretiert sind.

Der Einbau eines derartigen Bauelements hat sich bei Lenkanlagen für Kraftfahrzeuge mit im Lenkrad integrierter Gassack-Aufprall-Schutzeinrichtung als ausgesprochen zweckmäßig erwiesen, um eine problemlose Übertragung des für die Zündung des Gasgenerators erforderlichen elektrischen Stroms zu gewährleisten.

Wegen der Längenbemessung des bandförmigen Stromleiters hinsichtlich des bei Lenkrädern für Kraftfahrzeuge üblichen Maximalausschlags von insgesamt etwa sechs Umdrehungen muß die Montage der Vorrichtung zur Übertragung der elektrischen Energie in der Mittelstellung des Stromleiters bei Einstellung der Räder des Kraftfahrzeugs auf Geradeausfahrt erfolgen. Bei unbeabsichtigtem versehentlichen Verdrehen des gestellfest montierbaren Bauteils gegenüber dem drehbaren Bauteil vor der Montage ergibt sich eine einseitige Verkürzung des maximalen Drehwinkels des Lenkrades, die zu Unfallgefährdung Anlaß gibt oder zu einem Abreißen der Vorrichtung zur Übertragung der elektrischen Energie und damit zum Funktionsausfall der Gassack-Aufprall-Schutzeinrichtung führen kann.

Um das zu vermeiden, ist in der DE-A-3 041 258 ein Stromleitungsverbinder für gegeneinander drehbare Bauteile von Kraftwagenlenkungen mit einem aus zwei Teilen bestehenden Gehäuse vorgesehen, dessen Teile zum Zwecke der Justierung in der Einbaulage mittels einer als Sollbruchstelle wirkenden unter der Einwirkung einer vorbestimmten Kraft zerstörbaren Verbindung miteinander verbunden sind. Ein derartig ausgebildeter stromleitungsverbinder hat sich in der Praxis jedoch nicht durchsetzen können, da die vor der Endmontage notwendigen Funktionsprüfungen, beispielsweise die Prüfung des Drehmomentes und des Drehwiderstandes, eine Drehung des Lenkrades von Anschlag zu Anschlag notwendig machen und damit die Zerstörung der Sollbruchstelle bewirken. Darüber hinaus ist eine Sicherung im Falle einer späteren Montage nach ggf. wartungsbedingtem Ausbau mit einem derartigen stromleitungsverbinder nicht durchführbar.

Es ist deshalb in der EP-B-0 195 831 eine Justiereinrichtung für einen Stromleitungsverbinder von Gassack-Aufprall-Schutzeinrichtungen beschrieben, bei der in einem gestellfest montierbaren Gehäuse ein im wesentlichen von einem Spiralband gebildeter Stromleiter in mehreren konzentrischen Wicklungen angeordnet und ein an der Lenkradspindel befestigter und mit dem Lenkrad drehender Kern vorgesehen ist. Die Enden des Stromleiters enden an den Klemmen des Gehäuses einerseits und des Kerns andererseits. Der Kern ist gegen dem Gehäuse zu Montagezwecken in der Weise justiert, daß der Kern mit einer Bohrung und das Gehäuse mit einer Rastausnehmung versehen und das Gehäuse und der Kern mittels eines Riegels gegeneinander fixierbar sind. Der Riegel weist einen in die Bohrung des Kerns einklipsbaren Klipsstift sowie eine in die Rastausnehmung einpaßbare Rastnase auf. Der Nachteil dieses Stromleitungsverbinders besteht darin, daß die Justiereinrichtung nach der Montage des Stromleitungsverbinders vor der Montage des Lenkrads entfernt werden muß.

Es ist die Aufgabe der vorliegenden Erfindung, ein Bauelement zur Übertragung elektrischer Energie des eingangs beschriebenen Aufbaus bereitzustellen, bei dem nach der Montage des Lenkrads die Arretierung zwischen dem gestellfest montierten Bauteil und dem drehbaren Bauteil aufgehoben wird.

Die Lösung dieser Aufgabe besteht darin, daß das freie Schenkelende einer am äußeren Bauteil angeordneten Schenkelfeder in einer auf der Innenseite der Lippe angebrachte Nute unter Vorspannung eingerastet ist und auf beiden Seiten der Nute die Lippe jeweils eine Durchbrechung besitzt. Wird beim Drehen des Lenkrades eine bestimmte Grenzkraft überschritten, entfernt sich der Schenkel aus der Nute und bewegt sich durch die Durchbrechungen der Lippe in den freien Raum. Dort legt sich der Schenkel unter Vorspannung an einen Anschlag, um die Rastfeder zu fixieren und damit etwaige Vibrationsgeräusche zu vermeiden.

Um die Federkraft des freien Schenkelendes zu erhöhen, ist der freie Schenkel am Außenumfang des äußeren Bauteils abgestützt. Um ein Abkippen des freien Schenkels in Sperrichtung zu verhindern, ist dieser zweckmäßigerweise in einer am Außenumfang des äußeren Bauteils angebrachten Nute geführt.

Bei einer späteren, nach erfolgter Demontage erneut vorgenommenen Montage kann der drehbare Kern des Bauelements gegenüber dem gestellfest montierbaren äußeren Bauteil erneut mit Hilfe des Schenkelendes der Schenkelfeder arretiert werden.

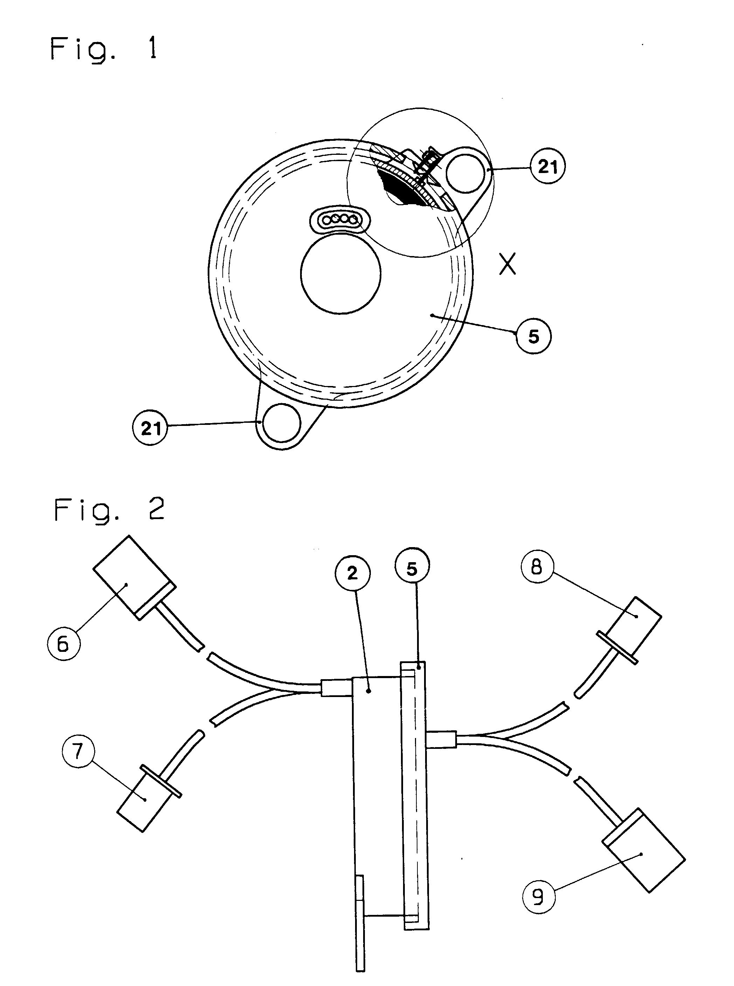

Die Erfindung ist in der Zeichnung beispielhaft erläutert und wird nachfolgend näher beschrieben. Es zeigen
- Fig. 1: eine Draufsicht des erfindungsgemäß ausgebildeten Bauelements, wobei ein Teil des Gehäuses im Bereich der Arretierung aufgeschnitten ist,
- Fig. 2: eine Seitenansicht des erfindungsgemäß ausgebildeten Bauelements,

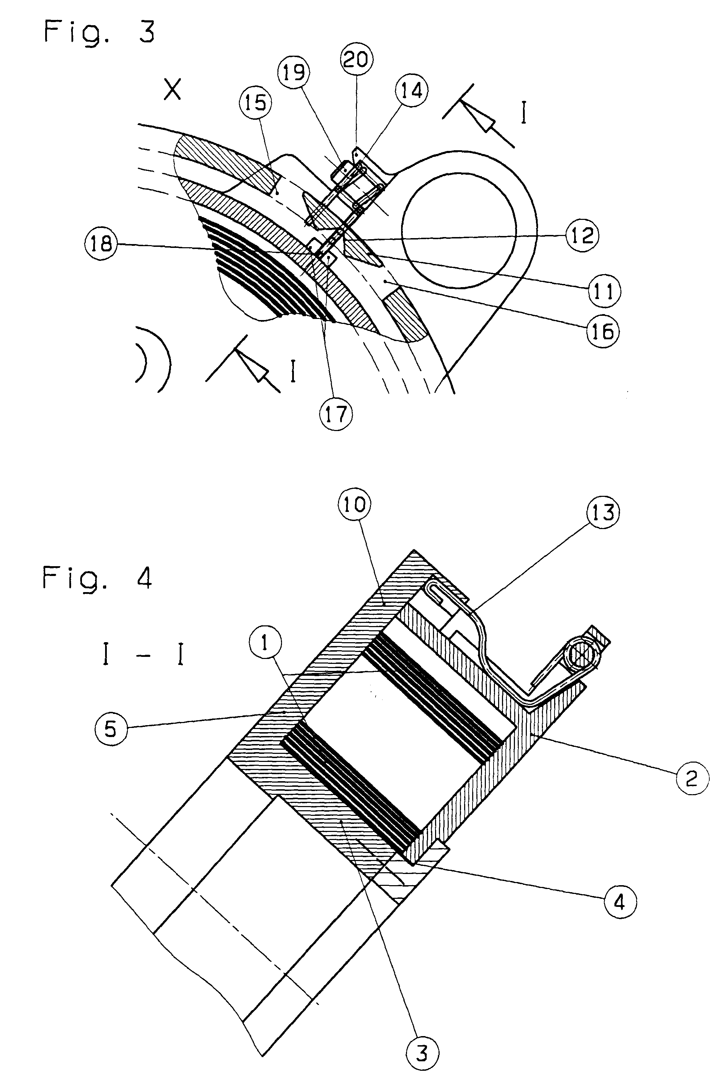

- Fig. 3: eine vergrößerte Darstellung des Details "X" der Fig. 1 und
- Fig. 4: einen Schnitt entlang der Linie I-I der Fig. 3.

Das erfindungsgemäß gestaltete Bauelement besteht aus dem bandförmigen Stromleiter (1), der in mehreren konzentrischen Wicklungen in dem gestellfest montierbaren topfförmigen äußeren Gehäusebauteil (2) um den hohlzylinderförmigen Kern (3) des in der Bodenöffnung (4) des äußeren Gehäuseteils (2) drehbar eingesetzten hutförmigen inneren Gehäuseteils (5) gewickelt ist. Die Enden des Stromleiters (1) sind mit den entsprechenden Klemmen (6, 7) des äußeren Gehäuseteils (2) bzw. des inneren Gehäuseteils (5) der Kabelverbindungen (8, 9) für die Hupe und die Gassack-Aufprall-Schutzeinrichtung gekoppelt. Am Außenumfang des einen größeren Durchmesser als der Durchmesser des äußeren Gehäuseteils (2) aufweisenden Flansches (10) des inneren Gehäuseteils (5) befindet sich eine in axiale Richtung erstreckende Lippe (11), auf deren Innenseite eine Nute (12) angebracht ist, in der der freie Schenkel (13) einer Schenkelfeder (14) unter Vorspannung eingerastet ist. Auf beiden Seiten der Nute (12) ist die Lippe (11) jeweils mit einer Durchbrechung (15, 16) versehen, durch die der freie Schenkel beim Ausrasten aus der Nute (12) austreten kann. Der freie Schenkel (13) ist an der Außenwand des äußeren Gehäuseteils (2) in einer in einem entsprechenden Vorsprung (17) befindlichen Längsnute (18) geführt. Die Schenkelfeder (14) ist auf den gestellfest angeordneten und mit dem äußeren Gehäuseteil (2) verbundenen Dorn (19) aufgeschoben und ist gegen ein Abschieben von dem Dorn (19) durch die Haltenase (20) positioniert. Am Außenumfang des äußeren Gehäuseteils (2) befinden sich Laschen (21), mit denen das Gehäuseteil (2) gestellfest angeordnet werden kann.

Die mit der Erfindung erzielten Vorteile bestehen insbesondere darin, daß die Aufhebung der Arretierung erst nach der Montage des Lenkrads erfolgt. Ein unbeabsichtigtes Verdrehen des inneren gegenüber dem äußeren Teil des Bauelements ist ausgeschlossen. Die Schenkelfeder ist für die Arretierung bei erneuter Montage des Lenkrads wieder benutzbar.

## Patentansprüche

1. Bauelement zur Übertragung elektrischer Energie von einem festen auf einen drehbaren Anlageteil, vorzugsweise für Lenkanlagen von Kraftfahrzeugen, insbesondere zur Stromzuleitung für den Gasgenerator eines Lenkrads mit integrierter Gassack-Aufprall-Schutzeinrichtung, bestehend aus einem bandförmigen, in mehreren konzentrischen Windungen in einem aus einem gestellfest montierbaren topfförmigen äußeren Bauteil (2) und einem mit seinem hohlzylinderförmigen Kern (3) in eine Bodenöffnung (4) des äußeren Bauteils drehbar eingesetzten hutförmigen inneren Bauteil (5) gebildeten Gehäuse aufgewickelten Stromleiter (1), dessen eines Ende am äußeren und dessen anderes Ende am inneren Bauteil des Gehäuses befestigt und mit Kabel- und Steckverbindungen (6, 7, 8, 9) verbunden ist, wobei am Außenumfang eines einen größeren Durchmesser als der Durchmesser des äußeren Bauteils aufweisenden ganz oder teilweise umlaufenden Flansches (10) des inneren Bauteils eine sich in axiale Richtung erstreckende Lippe (11) vorgesehen ist und äußerer und innerer Bauteil zu Montagezwecken in Einbaulage gegeneinander arretiert sind, dadurch gekennzeichnet, daß das Schenkelende (13) einer am äußeren Bauteil (2) angeordneten Schenkelfeder (14) in einer auf der Innenseite der Lippe (11) angebrachten Nute (12) unter Vorspannung eingerastet ist und auf beiden Seiten der Nute die Lippe jeweils eine Durchbrechung (15, 16) besitzt.

2. Bauelement nach Anspruch 1, dadurch gekennzeichnet, daß die Schenkelfeder (14) auf einem vorzugsweise einstückig mit dem äußeren Bauteil (2) verbundenen Dorn (19) geführt ist.

3. Bauelement nach den Ansprüchen 1 und 2, dadurch gekennzeichnet, daß sich das arretierend wirkende Ende (13) der Schenkelfeder (14) am Außenumfang des äußeren Bauteils (2) abstützt.

4. Bauelement nach den Ansprüchen 1 bis 3, dadurch gekennzeichnet, daß das arretierend wirkende Ende (13) der Schenkelfeder (14) in einer am Außenumfang des äußeren Bauteils (2) befindlichen Längsnute (18) geführt ist.

## Claims

1. A component for the transfer of electrical energy from a fixed system component to a rotatable system component, for preference for the steering systems for motor vehicles, in particular for conducting current for the gas generator of a steering wheel with an integrated airbag impact safety device, consisting of a strip-shaped current conductor (1) arranged in several concentric windings in a housing formed from an external component (2), which is pot-shaped and securely fitted to the chassis, and a hat-shaped inner component (5) with its hollow cylindrical core (3) rotatably located in a base aperture (4) of the outer component, one end of the said conductor being secured to the outer component of the housing and the other end to the inner component of the housing, and connected by cable and plug connections (6, 7, 8, 9), in which context provision is made for a lip (11), extending in an axial direction, which circumscribes in whole or in part the outer circumference of the flange (10) of the outer component, the said flange being of a diameter larger than the diameter of the outer component, and with the outer and inner components being locked against one another in the installation position for the purpose of assembly, characterised by the fact that the limb end (13) of a limb spring (14) arranged on the outer component (2) engages under preliminary tension in a slot (12) located on the inside of the lip (11), and that the lip has an aperture (13, 16) on both sides of the slot.

2. A component according to Claim 1, characterized by the fact that the limb spring (14) is guided on a bolt (19), which for preference is connected as one piece with the outer component (2).

3. A component according to Claims 1 and 2, characterised by the fact that the end (13) of the limb spring (14), which exerts the locking effect, is supported on the outer circumference of the outer component (2).

4. A component according to Claims 1 to 3, characterised by the fact that the end (13) of the limb spring (14), which exerts the locking effect, is guided in a longitudinal slot (18) located at the outer circumference of the outer component (2).

## Revendications

1. Composant pour la transmission d'énergie électrique d'une partie d'installation fixe à une partie d'installation rotative, de préférence pour des mécanismes de direction de véhicules à moteur, en particulier pour la ligne d'alimentation destinée au générateur de gaz d'un volant auquel est solidarisé un dispositif de protection contre les chocs à sac de gaz, comprenant un conducteur (1) en forme de ruban, enroulé en plusieurs enroulements concentriques dans un boîtier formé d'un organe extérieur (2) en forme de creuset pouvant être monté fixement au châssis et d'un organe intérieur (5) en forme de chapeau utilisé de manière rotative, avec son noyau (3) en forme de cylindre creux, dans une ouverture inférieure (4) du composant extérieur, conducteur dont une extrémité est fixée à l'organe extérieur du boîtier et dont l'autre extrémité est fixée à l'organe intérieur du boîtier et ces extrémités sont reliées à des raccordements de câble et des connecteurs à fiches (6, 7, 8, 9), une lèvre (11) s'étendant dans la direction axiale étant prévue à la périphérie extérieure dune collerette (10) de l'organe intérieur, entièrement ou partiellement rotative, présentant un diamètre plus grand que celui de l'organe extérieur, et les organes extérieur et intérieur, à des fins d'installation, étant arrêtés l'un contre l'autre dans une position de montage, caractérisé en ce que l'extrémité de branche (13) d'un ressort à branches (14) agencé sur l'organe extérieur (2) est en prise sous précontrainte dans une rainure (12) placée sur le côté Intérieur de la lèvre (11) et possède, des deux côtés de la rainure, la lèvre, respectivement une découpure (15, 16).

2. Composant selon la revendication 1, caractérisé en ce que le ressort à branches (14) est guidé sur une broche (19) reliée de préférence d'une seule pièce à l'organe extérieur (2).

3. Composant selon les revendications 1 et 2, caractérisé en ce que l'extrémité (13) agissante à l'arrêt, du ressort à branches (14) s'appuie sur la périphérie extérieure de l'organe extérieur (2).

4. Composant selon les revendications 1 à 3, caractérisé en ce que l'extrémité (13) agissante à l'arrêt, du ressort à branches (14) est guidée dans une rainure longitudinale (18) se trouvant à la périphérie extérieure de l'organe extérieur (2).
